# EUROPEAN PATENT APPLICATION

(11) **EP 2 264 641 A1**
(43) Date of publication of application: **22.12.2010**
(21) Application number: 09731407.4
(22) Date of filing: 07.04.2009
(51) Int. Cl.: G06F 21/24, G06F 13/00, G06F 21/20, H04M 1/00, H04W 12/02

(54) **INFORMATION PROCESSING DEVICE, LOCK CONTROL METHOD, AND LOCK CONTROL PROGRAM**

(30) Priority: 10.04.2008 JP 2008102081
(71) Applicant: NEC Corporation, Minato-ku Tokyo 108-8001 (JP)
(72) Inventor: FURUYA, Yukiko, Tokyo 108-8001 (JP)
(74) Representative: Vossius & Partner
(86) International application number: PCT/JP2009/057419
(87) International publication number: WO 2009/125862

(57) **Abstract**

In order to solve a problem in which the operation becomes complex when the user wants to view the data to which the lock is set, an information processing device includes lock temporal control means for bringing data which is locked into a lock canceled state based on a result of comparison between authentication request information input following a request for viewing the data and authentication information for canceling the lock, and display information creation means for creating display information to display the data brought into the lock canceled state, wherein the lock temporal control means locks the data brought into the lock canceled state again after the display information is displayed.

## Description

### Technical field

The present invention relates to an information processing device. Particularly, the present invention relates to the information processing device which performs a lock control, a lock controlling method and a lock controlling program.

### Background art

In a portable terminal such as a portable phone or the like, an information display application which aggregates user data stored in various applications such as received e-mail data, schedule data, and the like in one screen and displays a summary of each of the user data is used. This information display application has an advantage in which a user can confirm much data in one screen. The information display application includes, for example, an electronic mail data display application, a telephone book display application, a schedule display application, or the like. On the other hand, when a lock for security is set to at least one item among the various applications and the user data, the information display application performs the security protection by limiting its activation.

As the related technology, a data display device and a mobile portable information terminal device are disclosed in Japanese Patent Application Laid-Open No. 2000-148338.

By this related technology, a user can partially lock only the information which the user does not want to be disclosed to another person. Namely, the user can set the data display device so that the another person is requested to input a password in order to view a part of one character message which the user does not want to be disclosed to the another person and when the input password is not the same as the correct one, the information is not displayed.

Specifically, the data display device receives the message input by the user which the user does not want to be disclosed to the another person as a lower layer text. The data display device prepares another code for password (code B for password) as a lower layer code. When the password input by the user is not the same as the password registered in advance, the data display device does not display the lower layer text following the code in the screen.

The portable telephone terminal is disclosed in Japanese Patent Application Laid-Open No. 2002-142010. In this portable telephone terminal, a user sets a usable function for each lock level. Specifically, in the portable telephone terminal, level is set to a lock function and the usable function is specified for each set level. As a result, the portable telephone terminal can be used according to a usage environment of the user even when the function whose use frequency is high is in the lock state.

The portable terminal is disclosed in Japanese Patent Application Laid-Open No. 2007-274240. In this portable terminal, a mode setting is performed according to a request of the user, and whereby the leak of personal information is prevented when the user loses the portable terminal. Specifically, in the portable terminal, a display content (item) in a normal mode, a lock mode, and a semi lock mode is set for each telephone number. For example, in case of "semi lock mode", the portable terminal displays display data at the semi lock mode corresponding to the telephone number when an incoming call arrives. Data such as a nickname, initials, or the like that can be understood only by a portable terminal holder and cannot be understood by another user is registered as the display data at the semi lock mode.

### Disclosure of the invention

### Problems to be solved by the invention

As mentioned above, when the lock for security is set to at least one item among the various applications or the user data, the information display application performs a security protection by limiting its activation. For this reason, when the user wants to view the data to which the lock is set, an operation to cancel the lock is needed. Therefore, there is a problem in which the operation becomes complex.

In the technology described in the above-mentioned Japanese Patent Application Laid-Open No. 2000-148338, when a character message is displayed, the character which the user does not want to display is brought into a non-display state. In this Japanese Patent Application Laid-Open, a technology with which the locked data can be viewed without performing the complex operation by the user in an information display application is not disclosed.

The present invention is made in consideration of the above mentioned problem and addressed to provide an information processing device, a lock controlling method, and a lock controlling program with which the user can view the data to which the lock is set in response to request as well as display data to which the lock is not set on the information display application when the data to be displayed includes the data to which the lock is set.

### Means for solving the problems

A first information processing device of the present invention includes lock temporal control means for bringing data which is locked into a lock canceled state based on a result of comparison between authentication request information input following a request for viewing the data and authentication information for canceling the lock; and display information creation means for creating display information to display the data brought into the lock canceled state, wherein the lock temporal control means locks the data brought into the lock canceled state again after the display information is displayed.

A first lock controlling method of the present invention includes bringing data which is locked into a lock canceled state based on a result of comparison between authentication request information input following a request for viewing the data and authentication information for canceling the lock; creating display information to display the data brought into the lock canceled state; and locking the data brought into the lock canceled state again after the display information is displayed.

A first lock controlling program of the present invention allows a computer to perform: a process for bringing data which is locked into a lock canceled state based on a result of comparison between authentication request information input following a request for viewing the data and authentication information for canceling the lock; a process for creating display information to display the data brought into the lock canceled state; and a process for locking the data brought into the lock canceled state again after the display information is displayed.

### Effect of the invention

The present invention has an effect in which the user can view the locked data in response to request as well as the data which is not locked on the information display application.

### Brief description of the drawings

Fig. 1 is a block diagram showing a configuration of a portable terminal according to an exemplary embodiment 1 of the present invention.
Fig. 2 is a view showing an example of a display screen by an information display application of a portable terminal.
Fig. 3A shows an example of a display of received e-mail data when locked data does not exist.
Fig. 3B shows an example of a display of received e-mail data when both locked data and unblocked data exist.
Fig. 3C shows an example of a display of received e-mail data when all data are locked.
Fig. 4 is a flow chart showing an operation of an information display application of a portable terminal.
Fig. 5 is a flow chart showing a lock canceling operation by an information display application of a portable terminal.
Fig. 6 is a block diagram showing a configuration of a portable terminal according to an exemplary embodiment 2 of the present invention.
Fig. 7 is a flow chart showing a lock canceling operation by an information display application of a portable terminal.
Fig. 8 is a block diagram showing a configuration of an information processing device according to an exemplary embodiment 3 of the present invention.

### Description of symbol

- 11, 17: antenna
- 12, 20: wireless unit
- 13, 30: control unit
- 14, 50: display unit
- 15, 60: key input unit
- 16, 40: memory
- 21: information display application
- 22: received e-mail data
- 23: schedule data
- 24: frequently-used function information
- 25: lock icon
- 31: lock control unit
- 33: process control unit
- 34: display information creation unit
- 35: lock temporal control unit
- 41: user data
- 42: lock setting information
- 15, 50: key input unit

### Best mode for carrying out the invention

### Exemplary embodiment 1

An exemplary embodiment of the present invention will be described below with reference to attached drawings.

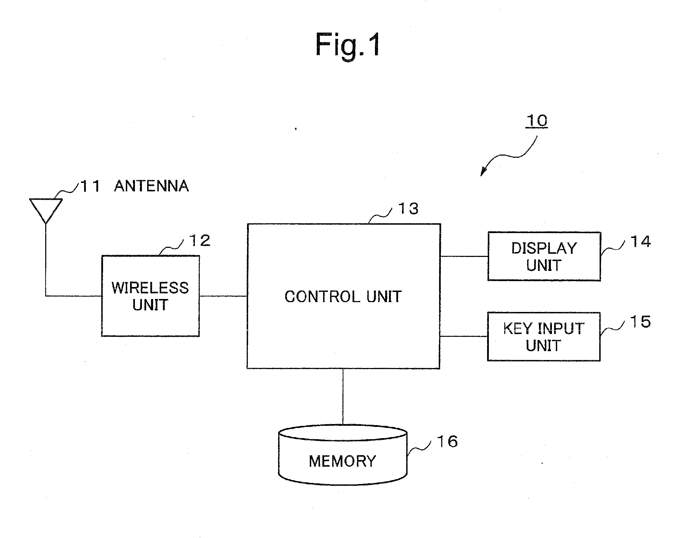

Referring to Fig. 1, a portable terminal 10 according to the present invention includes an antenna II, a wireless unit 12, a control unit 13, a display unit 14, a key input unit 15 and a memory 16.

The antenna 11 transmits and receives a communication message via a network. The wireless unit 12 performs a wireless control. The control unit 13 controls the operation of the portable terminal. The display unit 14 displays the information display application or the like. The key input unit 15 receives an input operation by the user. The memory 16 stores lock setting information and user data.

Further, in this exemplary embodiment, a portable telephone terminal is envisaged as an example of the portable terminal according to the present invention. Therefore, it is envisaged that the antenna 11 and the wireless unit 12 perform wireless communication. However, actually, it is not limited to these examples. The portable terminal according to the present invention can perform a wire communication if necessary. In this case, a cable for performing the wire communication corresponds to the antenna 11. An interface for communication that is connected to the cable corresponds to the wireless unit 12.

As another example of the portable terminal according to the present invention, a PC (Personal Computer), a thin client terminal, a game unit, a PDA (Personal Digital Assistants), a digital camera, a digital gadget or the like are considered. The portable terminal according to the present invention may be not only the terminal itself but also a repeater or a peripheral device. The portable terminal according to the present invention may comprise an expansion board mounted on a computer or a victual machine (VM) environment. However, actually, it is not limited to these examples.

As the antenna 11 and the wireless unit 12, for example, not only a wireless communication device such as the antenna or the like but also a network adapter such as a NIC (Network Interface Card) or the like and a communication port such as a connection port (connector) or the like may be used. As the network, for example, the Internet, a LAN (Local Area Network), a wireless LAN, a portable telephone network, a WiMAX (Worldwide Interoperability for Microwave Access), a 3G (third-generation mobile phone), a leased line, an IrDA (Infrared Data Association), Bluetooth (registered trademark), a serial communication line or the like may be used. However, actually, it is not limited to these examples.

As the control unit 13, for example, a processing device such as a CPU (Central Processing Unit), a microprocessor, or the like or a semiconductor integrated circuit (IC) or the like that has a similar function may be used. Further, the control unit 13 may be a program which causes a computer to perform a function of the control unit 13 in the present invention. However, actually, it is not limited to these examples.

As the display unit 14, for example, a display device such as a LCD (Liquid Crystal Display), a PDP (Plasma Display Panel), an organic EL display (organic electroluminescence display) or the like, a projection device such as a projector or the like that projects a content to be displayed on a wall or a screen, or a print device such as a printer or the like that prints the content to be displayed on a sheet or the like may be used. Furthermore, the display unit 14 may be an interface (I/F) which provides information for display to an external display device and makes the external display device display the information. Namely, the display unit 14 should be any output device. For example, the display unit 14 may operate so as to display an operation screen during a user operation and output the result based on the operation to the other output device after completion of the user operation. However, actually, it is not limited to these examples.

As the key input unit 15, for example, a keyboard or a keypad, a keypad on a screen, a touch panel, a tablet, or the like may be used. The key input unit 15 may be an interface (I/F) which acquires information from an external input device or a communication device. However, actually, it is not limited to these examples.

As the memory 16, for example, a semiconductor storage device such as a memory or the like, an external storage device (storage) such as a hard disk or the like, a storage medium (media), or the like may be used. Further, the memory 16 may be mounted on not only the portable terminal but also an external storage device accessible from the portable terminal, a server on the network, or the like. However, actually, it is not limited to these examples.

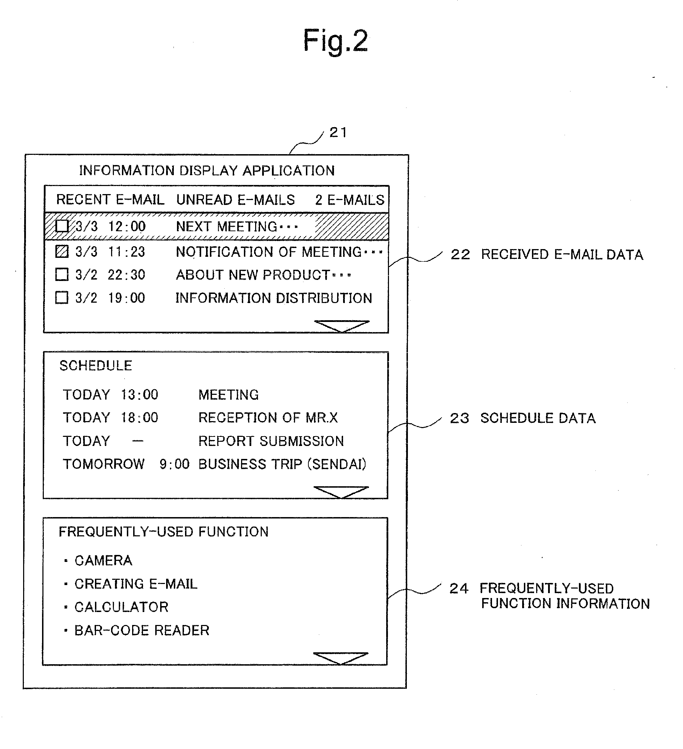

An example of the display screen of the information display application will be described with reference to Fig. 2.

An information display application 21 is displayed in the display unit 14 of the portable terminal. The information display application 21 is an application which can be displayed in one operation from a waiting screen. The control unit 13 can read user data from the memory 16 that is separately registered in plural of applications in response to activation of the information display application 21 and display a list of the read user data in one screen for each function. Here, the function means a function executed by the various applications. As the user data, for example, as shown in Fig. 2, received e-mail data 22, schedule data 23, frequently-used function information 24, and the like are used. The received e-mail data 22 shows lately received e-mail data. Here, as the received e-mail data 22, the received e-mail data are displayed in order of reception date and time from the last received e-mail data by the maximum number of the e-mail data that can be displayed in the screen. The schedule data 23 shows a schedule data regarding a few days. Here, as the schedule data 23, the schedule data regarding a few days are displayed in order of scheduled date and time from the most resent date and time by the maximum number of the schedule data that can be displayed in the screen. The frequently-used function 24 shows a function that has been frequently used by the user. Here, as the frequently-used function 24, the frequently-used functions are displayed in order of the number of use times from the greatest number by the maximum number of the functions that can be displayed in the screen. However, actually, it is not limited to these examples.

According to the present invention, the setting of the lock is separately performed for each data in the various applications. For example, in case of the received e-mail data 22, the control unit 13 can set the lock to each e-mail data. At that time, the user individually sets the lock by specifying each data by the key input unit 15 or sets the lock all at once by specifying a plurality of data. Here, the user selects the data to which the user wants to set the lock from a lock setting menu. When the user sets the lock, the user inputs a password of the terminal from the key input unit 15. It is suitable that the password of the terminal is the same as that for temporarily canceling the lock via the information display application 21.

Further, the control unit 13 temporarily cancels the lock to confirm the data while the application is displayed by the information display application 21. However, in the case of the control unit 13 cancels the lock setting formally, the user performs cancel operation from the lock setting menu as the user performs lock setting operation.

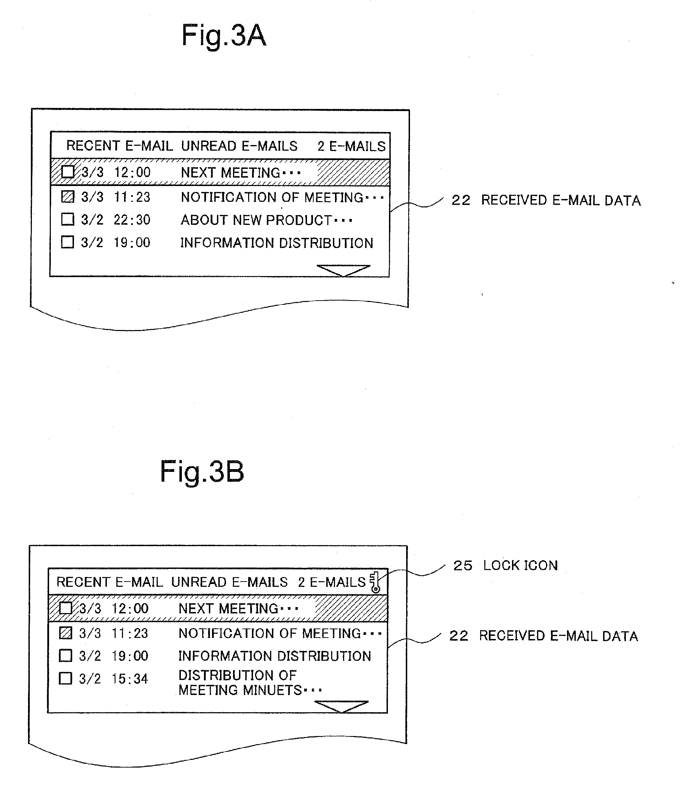

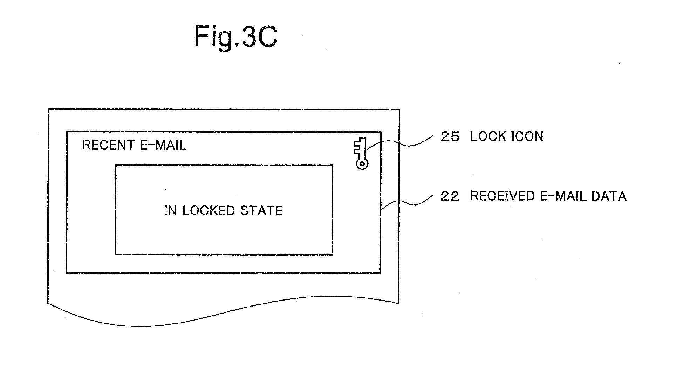

An example of a display of the locked data by the information display application will be described with reference to Fig. 3A, Fig. 3B, and Fig. 3C.

Here, a case in which the information display application 21 displays the received e-mail data 22 will be described as an example.

Fig. 3A shows an example of a display in a case in which the locked data does not exist. In this case, the information display application 21 displays all the data.

Fig. 3B shows an example of a display in a case in which the locked data exists. In this case, the information display application 21 displays only the data to which the lock is not set. Additionally, the information display application 21 displays a lock icon 25 for indicating that the data to which the lock is set exists. Here, the lock icon 25 is displayed on the display screen of the received e-mail data 22. Namely, the lock icon 25 is displayed for each function. Further, when at least one data to which the lock is set exists, the lock icon 25 is displayed. However, actually, one lock icon 25 may be enough in one screen.

Fig. 3C shows an example of a display in a case in which all the data are locked. In this case, the information display application 21 displays information indicating that all the data are locked and also displays the lock icon 25 which indicates that data to which the lock is set exists.

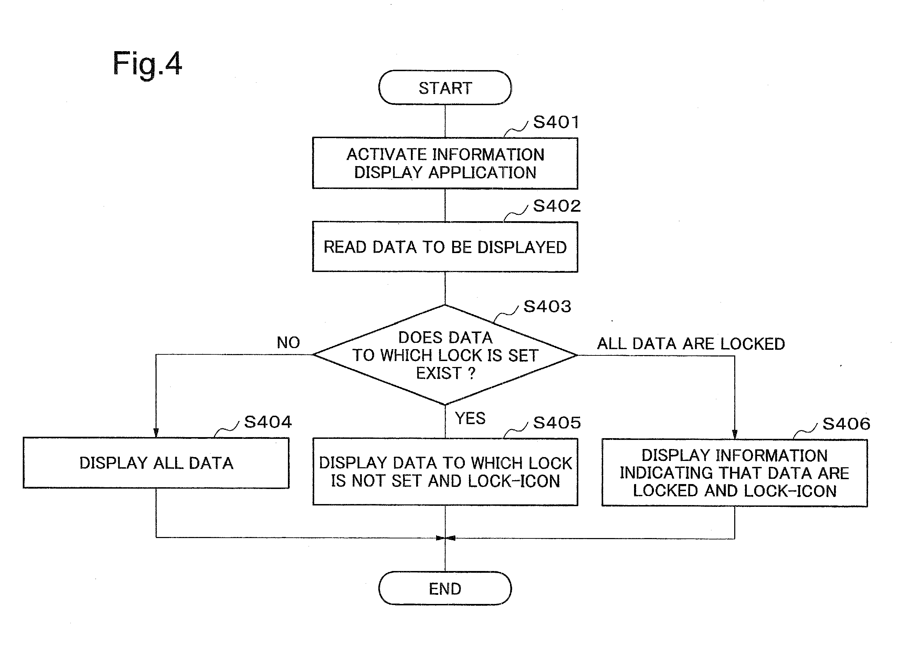

An operation procedure when the information display application is activated will be described with reference to Fig. 4.

### (1) Step S401

The user pushes a key to activate the information display application 21 in the key input unit 15 down in a state in which the waiting screen is displayed in the display unit 14. When the control unit 13 detects that the key to activate the information display application 21 is pushed down, the control unit 13 activates the information display application 21. Here, the control unit 13 may receive the notification indicating that the key to activate the information display application 21 is pushed down from the key input unit 15.

### (2) Step S402

The control unit 13 activates the information display application 21 and reads out the user data to be displayed and the information regarding the lock setting from the memory 16.

### (3) Step S403

The control unit 13 confirms whether the data to be displayed includes the data to which the lock is set.

### (4) Step S404

When the data to which the lock is set does not exist, the control unit 13 displays all the data in the display unit 14 as shown in Fig. 3A.

### (5) Step S405

When the data to which the lock is set exists, the control unit 13 displays only the data to which the lock is not set and additionally displays the lock icon 25 indicating that the data to which the lock is set exists in the display unit 14 as shown in Fig. 3B.

### (6) Step S406

When all the data to be displayed are the data to which the lock is set, the control unit 13 displays a character string, an image or the like indicating that the lock is set in the display unit 14 and additionally, displays the lock icon 25 which indicates that the data to which the lock is set exists in the display unit 14 as shown in Fig. 3C. For example, the control unit 13 displays a pop-up or the like in the display unit 14 to indicate that the data is locked.

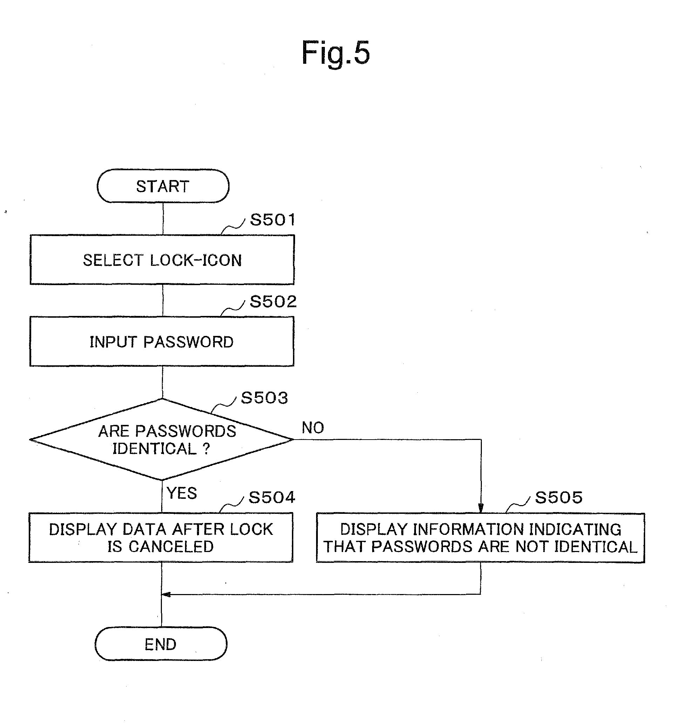

An operation procedure for canceling the lock will be described with reference to Fig. 5.

When the lock setting on the data is canceled by the information display application 21, the data to which the lock is set can be temporarily viewed.

### (1) Step S501

When the data to which the lock is set exists in the list on the information display application 21, the user selects the lock icon 25 displayed in the list by using the key input unit 15. The control unit 13 detects that the lock icon 25 is selected. Here, the control unit 13 may receive the notification which indicates that the lock icon 25 is selected from the key input unit 15.

### (2) Step S502

The control unit 13 displays a password input screen for canceling the lock in the display unit 14. The user enters the password from the displayed password input screen by the key input unit 15. The control unit 13 receives the password input from the key input unit 15.

### (3) Step S503

The control unit 13 confirms whether the input password is the same as the password for canceling the lock. It is suitable that the password for canceling the lock is stored in the memory 16. In this case, the control unit 13 refers to the password for canceling the lock stored in the memory 16 and confirms whether the input password is the same as the password for canceling the lock. The control unit 13 may refer to the password for canceling the lock stored in a server or the like on the network via the antenna 11 and the wireless unit 12.

### (4) Step S504

When the input password is the same as the password for cancelling the lock, the lock is canceled. Therefore, the control unit 13 displays all the data including the data to which the lock has been set in the display unit 14 as shown in Fig. 3A.

### (5) Step S505

When the input password is not the same as the password for canceling the lock, the control unit 13 does not cancel the lock and displays a character string, an image or the like which indicates that the lock cannot be canceled because of password conflict in the display unit 14. For example, the control unit 13 displays a pop-up or the like in the display unit 14 which indicates that the data cannot be canceled because of password conflict.

Here, the control unit 13 cancels the lock by comparing the input password with the password for canceling the lock. However, actually, it is not limited to the comparison of the password. For example, the control unit 13 may cancel the lock by biometric authentication based on fingerprint or the like or a comparison of information recorded in an IC chip embedded in an identification card or the like. In this case, the key input unit 15 includes a reading device (reader) for reading biometric authentication information or the information recorded in the IC chip or the like. However, actually, it is not limited to these examples.

The control unit 13 performs to "display data after the lock is canceled" in step S504 of Fig. 5. However, the canceling lock and the displaying data are temporary operations which are in operation for only a period in which the information display application 21 are running. Accordingly, when the information display application 21 terminates its running, the control unit 13 terminates the lock canceling and brings the data into the original lock state again.

Further, the information display application 21 may be terminated its running by a button operation or forcibly terminated its running by the control unit 13 when no operation is performed for a predetermined time. For example, the control unit 13 forcibly terminates the running of the information display application 21 when fifteen seconds have elapsed in a state in which no user operation to the information display application 21 is performed or no processing instruction based on the setting is issued (waiting state).

Accordingly, canceling the lock and displaying all the data in step S504 are "temporarily" performed only while the information display application 21 is running. Namely, canceling the lock is not performed actually and it is so-called "temporary the lock canceling". The really lock canceling is not performed by the selection of the lock icon 25 in step S501 but it is performed for example, by using a well-known (conventional technology) method from the displayed menu.

Here, the operation to bring the data into a viewable state has been described as the "canceling the lock". However, if the content of the data to which the lock is set can be viewed while the lock state is maintained, it is not necessary to actually cancel the lock by the information display application 21. For example, the information display application 21 creates a summary edition of the data to which the lock is set in advance before setting the lock. The information display application 21 does not usually display the summary edition and only when the lock icon 25 is selected, the summary edition may be displayed. Thus, a state in which the lock of the data is not actually canceled but a part of or the whole content of the data to which the lock is set can be viewed can be regarded as the "lock canceled state" in the present invention.

By the above mentioned operation procedure, the information display application 21 which aggregates the user data stored in the various applications such as the received mail, the schedule, or the like of the portable terminal in one screen and displays the summary can perform the following operations for security protection. Namely, the information display application 21 discriminates the state of the lock of the data to be displayed and can display only the data to which the lock is not set. Additionally, the information display application 21 displays the lock icon 25 when the data to which the lock is set exists. When the information display application 21 cancels the lock of those data, the user can temporarily view the data to which the lock is set.

While the control unit 13 cancels the lock of the data and displays the data to which the lock had been set in the display unit 14, the control unit 13 does not have to display the lock icon 25 in the display unit 14. In this case, when the control unit 13 ends the display of the data to which the lock had been set and the data is brought into the lock state, the control unit 13 displays the lock icon 25 in the display unit 14 again.

If the lock icon 25 displayed in the display unit 14 is selected while the control unit 13 cancels the lock of the data and displays the data to which the lock had been set on the display unit 14, the control unit 13 may display information on the display unit 14 which indicates that the data to which the lock had been set is already displayed. For example, the control unit 13 displays a pop-up or the like which indicates that the data to which the lock had been set is already displayed on the display unit 14.

When the lock of all the data is actually canceled or when all the data to which the lock is set are deleted, the control unit 13 ends the display of the lock icon 25. Namely, when the data to which the lock is set does not exist on the portable terminal, the control unit 13 does not display the lock icon 25.

As mentioned above, this exemplary embodiment relates to a lock controlling method in the information display application of the portable terminal.

According to the exemplary embodiment, the information display application is characterized by confirming the lock setting state of the data to be displayed and displaying only the data to which the lock is not set when the lock is set to the data to be displayed. According to the exemplary embodiment, it is **characterized in that**, by the information display application, the user can temporarily view the data to which the lock is set if the user cancels the lock by the information display application. Namely, according to the exemplary embodiment, it is **characterized in that**, by the information display application which aggregates in one screen the user data included in a plurality of applications and displays the summary, the user can temporarily view the data to which the lock is set.

By the exemplary embodiment, the information display application confirms the lock state of the data to be displayed at the time of the activation and can display only the data to which the lock is not set.

By the exemplary embodiment, when the data to be displayed includes the data to which the lock is set, the information display application can display the icon which indicates that the data to which the lock is set exists.

By the exemplary embodiment, when the lock is set to all the data and the data that can be displayed does not exist, the information display application can display information which indicates that all the data are locked.

By the exemplary embodiment, when the data to which the lock is set exists, the information display application can temporarily display the data to which the lock is set if the password is input.

Further, the exemplary embodiment is characterized by a method for controlling the lock of the data to be displayed. Accordingly, the exemplary embodiment can be applied to not only the portable terminal but also a display device such as a display, or the like, a projection device such as a projector or the like, or a print device such as a printer or the like.

### Exemplary embodiment 2

An exemplary embodiment 2 of the present invention will be described below with reference to the attached drawings.

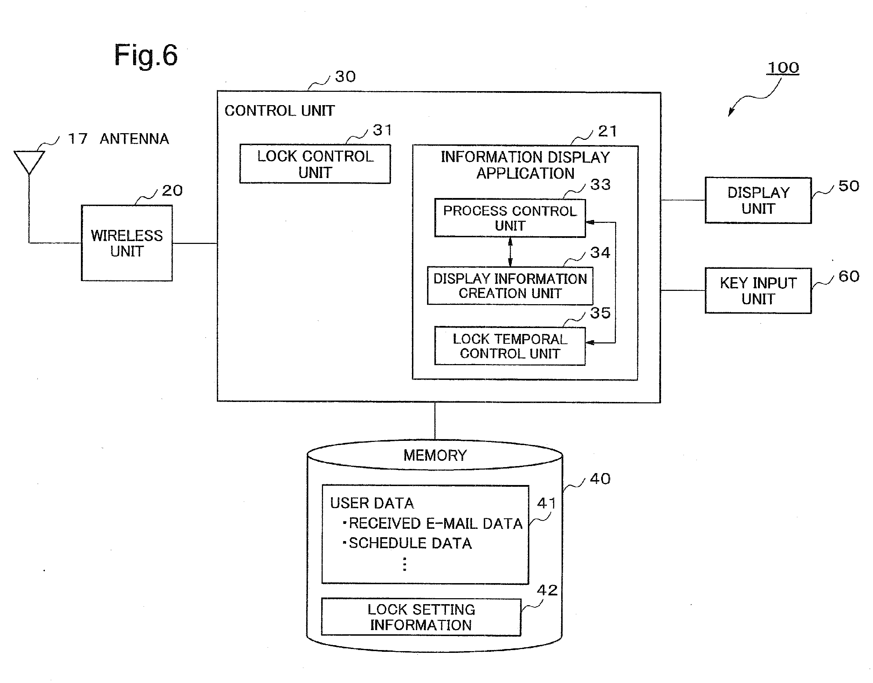

Fig. 6 is a block diagram showing a configuration of a portable terminal 100 according to the exemplary embodiment 2 of the present invention. As shown in Fig. 6, the portable terminal 100 includes an antenna 17, a wireless unit 20, a control unit 30, a memory 40, a display unit 50, and a key input unit 60.

The antenna 17 transmits/receives a communication message to/from a network. The wireless unit 20 performs a wireless control. The control unit 30 controls the operation of the portable terminal 100. The control unit 30 includes a lock control unit 31 and the information display application 21. The information display application 21 includes a process control unit 33, a display information creation unit 34 and a lock temporal control unit 35. The memory 40 stores a user data 41 such as the received e-mail data, the schedule data, or the like registered by the various applications, lock setting information 42, or the like. The display unit 50 displays various applications such as the information display application or the like. The key input unit 60 receives the input operation by the user.

Next, an operation of the control unit 30 of the portable terminal 100 will be described.

As mentioned above, the control unit 30 includes the lock control unit 31 and the information display application 21.

The lock control unit 31 controls the setting of the lock to the user data 41 for the security stored in the memory 40 which is registered by the various applications. The user data 41 includes for example, the received e-mail data, the schedule data, the phone number data, or the like. The lock control unit 31 can set the lock for each user data in the various applications. For example, the lock control unit 31 can set the lock to each of the received e-mail data.

The lock control unit 31 sets the lock to the user data by for example, the following operation. When an instruction of setting the lock is input to the key input unit 60 by the user, the lock control unit 31 reads the user data from the memory 40 in response to the instruction. The lock control unit 31 creates a lock setting menu to each of the user data and displays the created lock setting menu in the display unit 50.

The user sees the lock setting menu and designates the data to which the user wants to set the lock via the key input unit 60. The user may designate each of the data or designate the plurality of data all at once. At that time, the user inputs the terminal password.

The lock control unit 31 sets the lock to the data designated by the user. For example, the lock control unit 31 may set a lock setting flag to the designated data stored in the memory 40. The lock control unit 31 may create a list of the data to which the lock is set and store the created list into the memory 40. The lock control unit 31 also stores the terminal password input by the user in the memory 40. By the above mentioned operation, the lock control unit 31 sets the lock to the user data. The locked user data is usually not read by the information display application 21.

When the lock control unit 31 receives the lock cancel instruction from the user, the lock control unit 31 displays the lock setting menu to the user like the operation mentioned above and receives the selection of the data to which the user wants to cancel the lock. The lock control unit 31 receives the input of the terminal password from the user. When the input terminal password is the same as the terminal password stored in the memory 40, the lock control unit 31 cancels the lock of the selected data. For example, the lock control unit 31 may delete the lock setting flag of the corresponding data stored in the memory 40 or delete the list of the data to which the lock is set. Further, the terminal password may be referred to in a lock cancel process by the information display application mentioned later.

Next, an outline of the information display application 21 will be described. When the information display application 21 receives an activation instruction from the user, the information display application 21 reads out the user data 41 from the memory 40 and displays it in the display unit 50. The information display application 21 transfers by user's one operation from the waiting screen and the displays the user data 41 on the display unit 50.

The information display application 21 displays the display screen shown in Fig. 2 described in the exemplary embodiment 1 on the display unit 50. As shown in Fig. 2, the information display application 21 displays the list of the user data in one screen for each function such as an e-mail function, a schedule function, or the like. For example, as shown in Fig. 2, the information display application 21 displays the received e-mail data 22, the schedule data 23 and the frequently-used function information 24.

For example, the information display application 21 may display the e-mail data recently received by the portable terminal 100 in order of reception date and time from the last received e-mail data by the maximum number of the e-mail data that can be displayed in the screen as the received e-mail data 22. At that time, the information display application 21 may display the received date, the received time, and the title of each of the e-mail data. The information display application 21 may display the schedule data regarding a few days in order of scheduled date and time from the most resent date and time by the maximum number of the schedule data that can be displayed in the screen as the schedule data 23. At that time, the information display application 21 may display the schedule, the time, and the summary included in each of the schedule data. The information display application 21 may discriminate the frequently-used function based on the operation history of the user and display the frequently-used functions in order of the number of use times from the greatest number by the maximum number of the functions that can be displayed in the screen as the frequently-used function information 24. However, it is not limited to these examples.

Next, the information display application 21 will be described in detail.

As mentioned above, the information display application 21 includes the process control unit 33, the display information creation unit 34 and the lock temporal control unit 35. The process control unit 33 performs a transmission and reception of the data with the display unit 50 and the key input unit 60, and controls the display information creation unit 34 and the lock temporal control unit 35. The display information creation unit 34 creates the information displayed in the display unit 50. The lock temporal control unit 35 controls the lock setting to the user data 41.

The information display application 21 displays the user data by the procedure shown in Fig. 4 as described in the exemplary embodiment 1.

The user pushes a key to activate the information display application 21 in the key input unit 60 down in a state in which the waiting screen is displayed in the display unit 50. When the control unit 30 detects that the key is pushed down, the control unit 30 activates the information display application 21. At that time, the control unit 30 may receive the notification indicating that the key to activate the information display application 21 is pushed down from the key input unit 60.

When the information display application 21 is activated, the process control unit 33 instructs the display information creation unit 34 to create the display information of the data to be displayed. The display information creation unit 34 reads out the user data 41 to be displayed and the lock setting information 42 from the memory 40 in response to the above-mentioned instruction (Step S402). The display information creation unit 34 confirms whether the read-out data to be displayed includes the data to which the lock is set. (Step S403).

When the data to which the lock is set does not exist, the display information creation unit 34 creates the display information of all the read-out data and sends the created display information to the process control unit 33. The process control unit 33 displays the received display information on the display unit 50 (Step S404). The process control unit 33 displays the received e-mail data in the case in which the data to which the lock is set does not exit as shown in Fig. 3A as described in the exemplary embodiment 1.

When the data to which the lock is set and the data to which the lock is not set exist, the display information creation unit 34 creates the display information on the data to which the lock is not set and sends the created display information to the process control unit 33. At that time, the lock icon 25 is included in the display information by the display information creation unit 34. The lock icon 25 is an icon which indicates that the data to which the lock is set exists in the memory 40 and can be selected by the user via the key input unit 60. The process control unit 33 displays the received display information on the display unit 50 (Step S405). The process control unit 33 displays the received e-mail data in which the data to which the lock is set and the data to which the lock is not set exist as shown in Fig. 3B as described in the exemplary embodiment 1. As shown in Fig. 3B, the lock icon 25 is displayed on a display area of the received e-mail data. Namely, the lock icon 25 is displayed for each function. However, the display of the lock icon is not limited to this. Only one lock icon may be displayed in one screen.

When the lock is set to all the data to be displayed, the display information creation unit 34 creates the display information including a character string, an image or the like which indicates that the data is locked, and the lock icon 25, and sends the created display information to the process control unit 33. The process control unit 33 displays the received display information in the display unit 50 (Step S406). The lock icon 25 can be selected by the user via the key input unit 60 like the operation mentioned above. The process control unit 33 displays the received e-mail data in which the lock is set to all the data as shown in Fig. 3C as described in the exemplary embodiment 1. The process control unit 33 may display a pop-up or the like on the display unit 50 which indicates that the data is locked.

As mentioned above, when the data to be displayed includes the data to which the lock is set, the display information creation unit 34 creates the display information including the lock icon 25 which indicates that the data to be displayed includes the locked data and the data which is not locked. The process control unit 33 displays the created display information on the display unit 50. As a result, the user can recognize that the data to which the lock is set exists. When the user wants to view the data to which the lock is set, the user selects the lock icon 25 via the key input unit 60. The information display application 21 cancels the lock of the data with the following procedure in response to the selection of the lock icon 25.

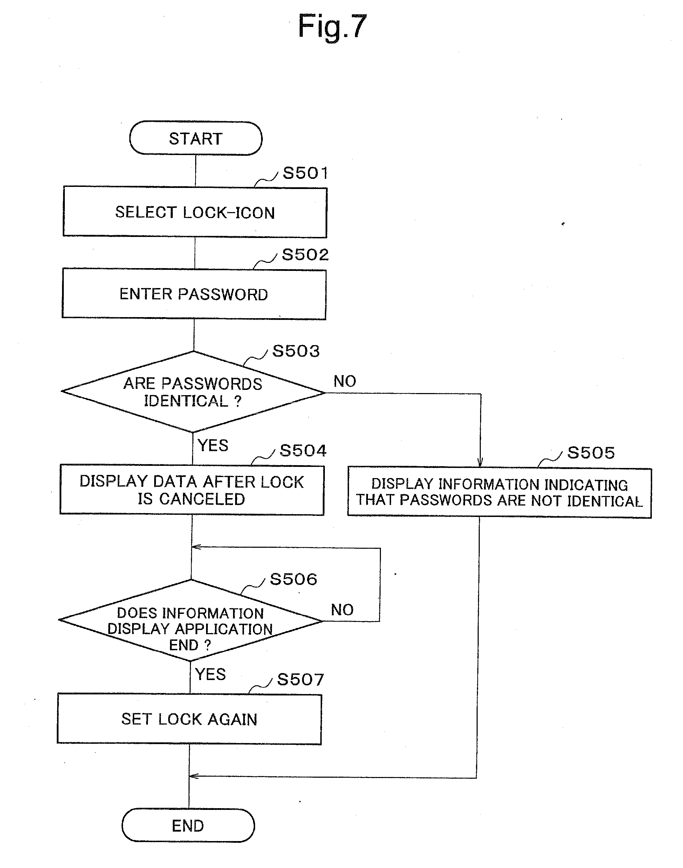

Fig. 7 is a flow chart showing an operation of a lock canceling by the information display application 21. The procedure of the lock canceling by the information display application 21 will be described with reference to Fig. 7.

When the user wants to view the data to which the lock is set, the user selects the lock icon 25 displayed in the display unit 50 via the key input unit 60 (Step S501). When the process control unit 33 of the information display application 21 recognizes that the lock icon 25 is selected, the process control unit 33 notifies the display information creation unit 34 of the information which indicates that the lock icon 25 is selected. The display information creation unit 34 creates a password input screen for canceling the lock in response to the above-mentioned notification and sends the created password input screen to the process control unit 33. The process control unit 33 displays the password input screen for canceling the lock in the display unit 50.

The user enters the password from the displayed password input screen via the key input unit 60 (Step S502). The process control unit 33 receives the input password and sends it to the lock temporal control unit 35. The lock temporal control unit 35 compares the received password with the password for canceling the lock. Namely, the lock temporal control unit 35 compares the lock setting information 42 stored in the memory 40 by the lock control unit 31 at the time of setting the lock with the received password to check whether both are the same or not as mentioned above (Step S503). The lock temporal control unit 35 may refer to the password for canceling the lock stored in the server or the like on the network via the antenna 17 and the wireless unit 20.

When the received password is the same as the password for canceling the lock, the lock temporal control unit 35 brings the data to which the lock is set among the user data to be displayed to the "lock cancel state". For example, the lock temporal control unit 35 may delete the lock setting flag of the data to which the lock is set. In this case, the lock temporal control unit 35 stores the data of which the lock setting flag is deleted. The lock temporal control unit 35 may set a "lock temporary cancel flag" to the data.

The lock temporal control unit 35 notifies the process control unit 33 of the information which indicates that the data is brought into the "lock cancel state". The process control unit 33 instructs the display information creation unit 34 to create the display information in response to the above mentioned information. The display information creation unit 34 reads the data brought into the lock cancel state from the memory 40 and creates the display information in which the read-out data and the data to which the lock is not set are combined. The display information creation unit 34 sends the created display information to the process control unit 33. The process control unit 33 displays the received display information in the display unit 50 (Step S504). Here, all the received e-mail data are displayed as shown in Fig. 3A.

Here, when the user selects the lock icon while the data brought into the lock canceled state is displayed in the display unit 50, the display information creation unit 34 may display information which indicates that the data to which the lock had been set is already displayed in the display unit 50. For example, the display information creation unit 34 may display a pop-up or the like which indicates that the data to which the lock had been set is already displayed on the display unit 50. At that time, it is not necessary for the display information creation unit 34 to display the lock icon 25 on the display unit 50. In this case, the display information creation unit 34 may terminate the display of the data brought into the lock canceled state and when the lock is set by the lock temporal control unit 35 again, may display the lock icon 25 on the display unit 50 again.

On the other hand, when the received password is not the same as the password for canceling the lock, the lock temporal control unit 35 does not bring the data to which the lock is set into the lock canceled state and sends the information which indicates that the lock cannot be canceled because of the password conflict to the process control unit 33. The process control unit 33 displays a character string, an image or the like which indicates the above-mentioned information on the display unit 50. For example, the process control unit 33 may display a pop-up or the like which indicates that the lock cannot be canceled because of password conflict on the display unit 50.

Here, the lock temporal control unit 35 cancels the lock by comparing the input password with the password for canceling the lock. However, the lock temporal control unit 35 can use another method to cancel the lock. For example, the lock temporal control unit 35 can cancel the lock by biometric authentication using fingerprint or the like or a cross-check of information recorded in an IC chip embedded in an identification card or the like. In this case, the key input unit 60 includes a reading device for reading the biometric authentication information or the information recorded in the IC chip or the like. However, it is not limited to these examples.

Next, the user inputs an instruction to end the information display application 21 into the key input unit 60 (Step S506). When the process control unit 33 receives the instruction to end the information display application 21, it instructs the lock temporal control unit 35 to set the lock to the data which was brought into "lock canceled state" again. The lock temporal control unit 35 sets the lock to the data again in response to the above-mentioned instruction (Step S507). For example, the lock temporal control unit 35 may set the lock setting flag again to the data that is stored as the data of which the lock setting flag had been deleted as mentioned above. The lock temporal control unit 35 may delete the lock temporary cancel flag of the data. By the above-mentioned operation, the lock is set to the data again and the user cannot view it. The lock temporal control unit 35 notifies the process control unit 33 of the information which indicates that the lock is set again. The process control unit 33 ends the information display application 21 in response to the above mentioned notification.

The information display application 21 may be terminated its running by the user's instruction or forcibly terminated its running by the control unit 33 when no operation is performed for a predetermined time. For example, the process control unit 33 measures a time period of a waiting state in which the user's operation is not performed or the processing instruction based on the setting is not issued to the information display application 21. When the measured period exceeds fifteen seconds, the process control unit 33 may forcibly terminate the running of the information display application 21.

Thus, the lock cancel and the display of all the data in step S504 are "temporarily" performed only while the information display application 21 operates. Namely, the lock cancel is not a formal lock cancel and it is "a temporary lock canceling". The formal lock cancel is not performed by the selection of the lock icon 25 in step S501 and it is performed by for example, the lock control unit 31 by using the well-known technology as mentioned above.

Here, the "lock canceled state" includes the following state. Namely, as mentioned above, before the lock is set by the lock control unit 31, various applications 32 create the summary edition of each of the data and stores the created summary edition into the memory 40. When the lock is set by the lock control unit 31, the data and the summary edition cannot be viewed. As mentioned above, when the lock icon 25 is selected, the lock temporal control unit 35 reads the summary edition from the memory 40 and may create the display information so that the read-out summary edition is displayed by the display information creation unit 34. Thus, a state in which a part of or the whole content of the data to which the lock is set can be viewed even if the lock of the data is not actually canceled is defined as the "lock canceled state" in the exemplary embodiment.

When the lock is actually canceled by the lock control unit 31 with respect to all the data or when all of the data to which the lock is set are deleted, the display information creation unit 34 ends the display of the lock icon 25. Namely, when the data to which the lock is set does not exist on the portable terminal 100, the display information creation unit 34 does not display the lock icon 25.

Here, when the user selects the lock icon while the display information creation unit 34 displays the data which was brought into the lock canceled state on the display unit 50, the lock temporal control unit 35 may set the lock to the data which was brought into the lock canceled state again. The display information creation unit 34 may not display the data to which the lock is set again.

As mentioned above, according to this exemplary embodiment 2, the display information creation unit 34 in the information display application 21 determines the lock state of the data to be displayed and displays only the data to which the lock is not set. When the data to which the lock is set exists, the display information creation unit 34 displays the data to which the lock is not set and also displays the lock icon 25. When a request for viewing the data to which the lock is set is received, the lock temporal control unit 35 receives the input of the password. When the input password is the same as the password for canceling the lock, the lock temporal control unit 35 brings the data into the lock canceled state. The display information creation unit 34 creates the display information which includes the data to which the lock is not set and the data which was brought into the lock canceled state. The process control unit 33 displays the created display information on the display unit 50. By the above mentioned configuration, an effect in which the user can keep the security of the user data and can view the data to which the lock is set without performing the complex operation can be obtained.

### Exemplary embodiment 3

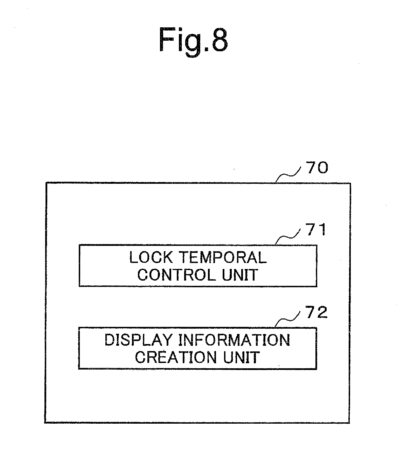

Fig. 8 is a block diagram showing a configuration of an information processing device 70 according to an exemplary embodiment 3 of the present invention. As shown in Fig. 8, the information processing device 70 includes a lock temporal control unit 71 and a display information creation unit 72.

The lock temporal control unit 71 brings the data to which is locked into the lock canceled state based on the result of comparison between authentication request information input following the request for viewing the data and authentication information for canceling the lock.

The display information creation unit 72 creates the display information to display the data brought into the lock canceled state. The lock temporal control unit 71 locks the data brought into the lock canceled state again after the display information is displayed.

As mentioned above, according to this exemplary embodiment 3, an effect in which the user can view the locked data in response to request as well as the data which is not locked on the information display application can be obtained.

The present invention has been described above with reference to the exemplary embodiments. However, the present invention is not limited to the above-mentioned exemplary embodiments. The various changes in configuration or details of the present invention of which the person skilled in the art can understand in the scope of the present invention can be made.

### Industrial applicability

The present invention relates to a lock control of data to be displayed and can be applied to a portable terminal, a display device such as a display or the like, a projection device such as a projector or the like, or a print device such as a printer or the like.

This application claims priority based on the Japanese Patent Application No. 2008-102081 filed on April 10th, 2008 and the disclosure of which is hereby incorporated by reference in its entirety.

## Claims

1. An information processing apparatus **characterized by** comprising:
lock temporal control means for bringing data which is locked into a lock canceled state based on a result of comparison between authentication request information input following a request for viewing the data and authentication information for canceling lock; and
display information creation means for creating display information to display the data brought into the lock canceled state, wherein
the lock temporal control means locks the data brought into the lock canceled state again after the display information is displayed.

2. The information processing apparatus according to claim 1, **characterized in that** the display information creation means includes lock information indicating that the data which is locked exists into the display information when the data which is locked exists.

3. The information processing apparatus according to claim 2, **characterized in that** the display information creation means does not include the lock information into the display information while the data brought into the lock canceled state is displayed.

4. The information processing apparatus according to any one of claims 1 to 3, **characterized in that** the display information creation means stops displaying in response to a predetermined input operation.

5. The information processing apparatus according to any one of claims 1 to 4, **characterized in that** the display information creation means stops displaying when no operation is performed during a predetermined time period.

6. The information processing apparatus according to any one of claims 1 to 5, **characterized in that** the display information creation means includes a summary of the data brought into the lock canceled state into the display information.

7. The information processing apparatus according to any one of claims 1 to 6, **characterized in that** the authentication information for canceling the lock is stored when the data is locked.

8. A lock controlling method **characterized by** comprising:
bringing data which is locked into a lock canceled state based on a result of comparison between authentication request information input following a request for viewing the data and authentication information for canceling lock;
creating display information to display the data brought into the lock canceled state; and
locking the data brought into the lock canceled state again after the display information is displayed.

9. The lock controlling method according to claim 8, **characterized by** comprising:
including lock information indicating that the data which is locked exists into the display information when the data which is locked exists.

10. The lock controlling method according to claim 9, **characterized in that** the lock information is not included into the display information while the data brought into the lock canceled state is displayed.

11. The lock controlling method according to any one of claims 8 to 10, **characterized by** comprising:
stopping displaying in response to a predetermined input operation.

12. The lock controlling method according to any one of claims 8 to 11, **characterized by** comprising:
stopping displaying when no operation is performed during a predetermined time period.

13. The lock controlling method according to any one of claims 8 to 12, **characterized by** comprising:
including a summary of the data brought into the lock canceled state into the display information.

14. The lock controlling method according to any one of claims 8 to 13, **characterized by** comprising:
storing the authentication information for canceling the lock when the data is locked.

15. A lock controlling program **characterized by** allowing a computer to perform:
a process for bringing data which is locked into a lock canceled state based on a result of comparison between authentication request information input following a request for viewing the data and authentication information for canceling lock;
a process for creating display information to display the data brought into the lock canceled state; and
a process for locking the data brought into the lock canceled state again after the display information is displayed.

16. The lock controlling program according to claim 15, **characterized by** comprising a process for including lock information indicating that the data which is locked exists into the display information when the data which is locked exists.

17. The lock controlling program according to claim 16, **characterized in that** the lock information is not included in the display information while the data brought into the lock canceled state is displayed.

18. The lock controlling program according to any one of claims 15 to 17, **characterized by** comprising a process for stopping displaying in response to a predetermined input operation.

19. The lock controlling program according to any one of claims 15 to 18, **characterized by** comprising a process for stopping displaying when no operation is performed during a predetermined time period.

20. The lock controlling program according to any one of claims 15 to 19, **characterized by** comprising a process for including a summary of the data brought into the lock canceled state into the display information.

21. The lock controlling program according to any one of claims 15 to claim 20, **characterized by** comprising a process for storing the authentication information for canceling the lock when the data is locked.
